# EUROPEAN PATENT SPECIFICATION

(11) **EP 0 525 822 B1**
(45) Date of publication and mention of the grant of the patent: **16.04.1997**
(21) Application number: 92114850.8
(22) Date of filing: 07.06.1988
(51) Int. Cl.: G01S 7/48, F42C 13/02

(54) **A receiver**
Empfänger
Récepteur

(43) Date of publication of application: 03.02.1993
(62) Divisional of application: 88201169.5
(73) Proprietor: Bofors AB, 691 80 Karlskoga (SE)
(72) Inventor: Skagerlund, Lars-Erik, S-691 52 Karlskoga (SE)
(74) Representative: Falk, Bengt

(56) References cited:
- DE-A- 3 531 378
- US-A- 4 015 530
- US-A- 4 306 500

## Description

### TECHNICAL FIELD

The present invention relates to an optical receiver adapted for mounting in a unit, having an elongate shape, with a central axis of symmetry, such as a missile, projectile or the like. When operating, the receiver receives two or more optical strobes reflected from a target object, which optical strobes are incident at mutually different angles of incidence on the unit. The receiver comprises first and second receiver sections mounted at respective locations on the unit, which said receiver sections operate cooperatively, and receive respectively the optical strobes incident thereon. Each said first and second receiver sections comprises an electrical signal initiation circuit including photodetection means, each said signal initiation circuit generating and outputting a respective electric signal in response to reception therein of incident optical strobes, a first photodetection means receiving optical strobes incident on said first receiver section , and a second photodetection means receiving optical strobes incident on said second receiver section, said electrical signals occurring at mutually displaced times, due to the different mounting locations of the receiver sections with respect to the incident strobes. The optical receiver further including sensing means which senses said electrical signals and produces an indication signal which indicates reception by a receiver section of an optical strobe.

### BACKGROUND ART

An optical receiver according to the above is known from US-A-4 015 530 in which two optical channels are included in a fuzing system. The two channels, one forward looking channel and one rearward looking channel, involve a receiver operation. The fuzing system will only be activated if the forward looking channel detects a target and the rearward looking channel sees the same target in a specific time interval. In such a system a target may be detected but the direction to the target is not determinable from the channel information. In the receiver operation the infrared energy radiated by an enemy target is detected by the fuzing system.

Receivers according to the preamble may also form part of so-called proximity fuses of the type which emits electromagnetic radiation in the form of narrow lobes and receives lobes reflected on the target on which the unit is homing for the purpose of realizing target detection for control of functions within the unit.

Proximity fuses are well known in this art and it is also well known in the art to cause the proximity fuse to operate with narrow part lobes which together cover the entire circumference of the unit such that all-round sensing may be effected. It is further previously known in this art to signal process a received signal in the proximity fuse from each part lobe individually.

The division of emitted energy into narrow part lobes and individual signal processing of the part lobe signals affords advantages in that the so-called return dispersion may be kept to a minimum despite the desired high level of emission power.

In associated types of receivers, there is a need to increase the level of tolerance in respect of return dispersion in relation to prior-art performance. Moreover, wishes have been expressed within the art that the equipment as such must be able to operate with relatively few components.

### OBJECT OF THE PRESENT INVENTION

The present invention has for its object to solve the above and other disclosed problems, and that which may substantially be considered as characterizing the novel receiver according to the present invention is that the receiver sections are mounted at locations on the surface of said unit distributed around the central axis of the unit, and that the first and second photodetection means have polarised electrical connections and are inversely interconnected through these electrical connections such that the polarities of said electrical signals are mutually inverted, said sensing means comprising means for adding together the said electrical signals output from said receiver sections.

In further developments of the inventive concept as herein disclosed, account is taken of the mutual placings of the receiver sections around the central axis of the unit. The major requirement, in this instance, is that the receiver must be directed in such a manner from each other that one receiver section cannot receive a strobe which is intended for the other receiver section. Viewed around the central axis of the unit, it is advantageous if the angle between the receiver sections is of greater magnitude, preferably between ±90-180°.

Further embodiments of the present invention indicate in greater detail how the receiver sections are to cooperate in the signal initiation circuit. The device sensing the pulses following the signal initiation circuit may comprise two parallel threshold devices. The photodetectors of the receiver sections are mutually interconnected to potentials such that pulses of different polarities are obtained. The threshold devices are, in this instance, arranged such that the first threshold device is activated for pulses from the first receiver section and the second threshold device is activated for pulses from the second receiver section. The single-out feature is obtained in such a manner that one of the threshold devices will be activated.

The receiver may comprise two or more pairs of receiver sections. Within each respective pair of receiver units, these may operate independently of remaining receiver sections.

As a result of the above-proposed arrangement, advantages will be achieved on receipt of pulsed optical strobes received in the unit. The electrical signal initiation and signal processing will be manifestly simple, at the same time as return dispersion may effectively be kept at a low level.

### BRIEF DESCRIPTION OF THE ACCOMPANYING DRAWINGS

One currently proposed embodiment of a receiver displaying the significative characterizing features of the present invention will be described in greater detail below with reference to the accompanying drawing, in which:

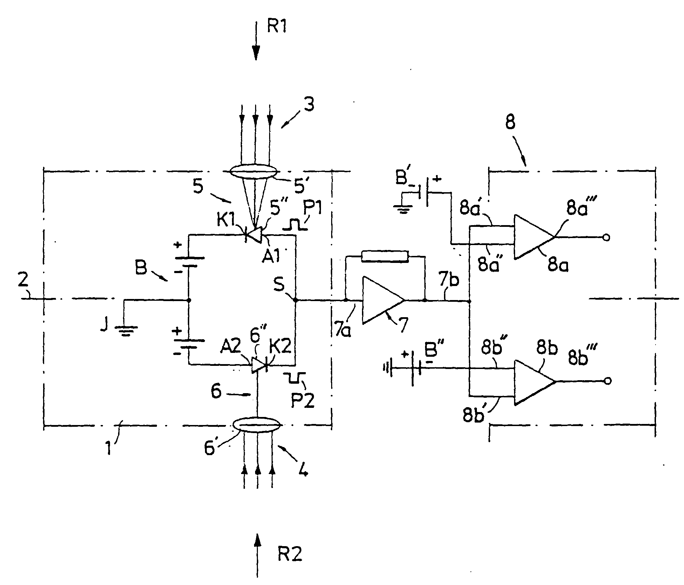

Fig. 1 is a schematic side elevation showing the application of the receiver in a missile body, shown in part.

### DESCRIPTION OF PREFERRED EMBODIMENT

In the Figure, the missile fuselage is indicated by reference numeral 1 and its centre axis by reference numeral 2. The missile is fitted with a proximity fuse which is illustrated only in those parts which are dealt with in the present invention. Hence, the transmitter means of the proximity fuse are not shown, it being presupposed that these are of such type as emit the electromagnetic radiation in the form of narrow part lobes which, together, cover the entire circumference of the missile so that the emitted optical energy radiates outwardly in full circle. The number of part lobes may vary without in any manner effecting the inventive concept of the principles for receptive function as described in the following presentation.

In the Figure, two received strobes 3 and 4 are shown, these having been emitted from the emitter devices and reflected on a target (not shown).

The receiver in the proximity fuse/missile is divided into at least two receiver units 5 and 6, the first receiver unit being intended to receive the first strobe 3 which impinges upon the robot in a direction R1, and the second receiver 6 is intended to receive the strobe 4 which impinges in a direction R2. In the illustrated embodiment, the directions R1 and R2 are diametrically opposed to one another. Generally however, the present invention functions for other mutual angles of incidence between the directions R1 and R2. The requirement is that the receivers must be directed in such a manner away from one another that the one receiver is not capable of receiving the part lobe of the other receiver when this is reflected on its largest imaginary target.

Each respective receiver unit includes a collimator lens 5' and 6', respectively, and a photodetector 5'', and 6'', respectively. The anode A1 in the first detector 5'' is interconnected, at a junction point S, with the cathode K2 in the detector 6''. The cathode K1 in the detector 5'' is coupled to plus potential and the anode A2 in the detector 6'' is coupled to minus potential. These potentials are obtained from a battery B in the unit, this battery being provided with per se known earth J.

As a result of the illustrated interconnection of the detectors 5'' and 6'', activation of the receiver units 5 and 6 will generate pulses P1 and P2, respectively, of different signs. In that but a single lobe is reflected on one and the same occasion in the target, the pulses P1 and P2 cannot occur simultaneously.

An operational amplifier 7 of per se known type is connected, with its input 7a, to the above-mentioned interconnection point S. The output 7b of the operational amplifier is, in its turn, connected to a threshold circuit 8. This latter includes two threshold devices 8a, 8b of per se known type. In the illustrated case, the threshold devices are in the form of comparators with two inputs, the first inputs 8a' and 8b', respectively, being connected to the output 7b on the amplifier 7. The inputs 8a'' and 8b'' are each connected to their reference voltage which is realized by battery B' and B'', respectively. Hence, the input 8a" is connected to plus potential and the input 8b'' to minus potential.

On incoming signals on the inputs 8a' and 8b'', respectively, which exceed a certain amplitude preset by means of the reference voltage on 8a'' and 8b'', respectively, there will be obtained activations of the outputs 8a''' and 8b''', respectively, of the comparator 8a and 8b.

In brief, the apparatus functions as follows. On an incoming strobe 3 from the direction R1, the receiver 5 is activated, in whose detector 5" the pulse P1 then occurs. This pulse is amplified in the amplifier 7. The amplified pulse is impressed upon the input 8a'. If the amplitude in the pulse P1 exceeds a predetermined level, a signal will be obtained on the output 8a"'. Using this signal, it is thus possible to single out the receiver section 5 activated on this particular occasion.

If, instead, a strobe 4 occurs in the direction R2, the receiver section 6 will be correspondingly activated, whose detector 6" gives the pulse P2. This latter pulse has a sign which is opposed to the sign in the pulse P1. The pulse P2 is amplified correspondingly in the amplifier 7 and the amplified pulse is impressed upon the input 8b'. Correspondingly, the threshold 8b emits a signal on the output 8b"'. The activated output thus singles out the receiver section 6 every time this is activated by an incoming strobe 4.

The single-out function may also be employed within the missile for controlling its internal functions.

In that the pulses P1 and P2 are counterdirected in relation to one another, a subtraction effect of the return dispersion will be obtained in the illustrated connection. This makes for greater possibilities to realize a higher signal/background contrast relationship.

## Claims

1. An optical receiver adapted for mounting in a unit, having an elongate shape, with a central axis of symmetry, such as a missile, projectile or the like, which receiver when operating, receives two or more optical strobes (3, 4) reflected from a target object, which optical strobes are incident at mutually different angles of incidence (R1, R2) on the unit, the receiver comprising first and second receiver sections (5, 6), mounted at respective locations on the unit, which said receiver sections operate cooperatively, and receive respectively the optical strobes incident thereon, said first and second receiver sections each comprising an electrical signal initiation circuit (5", 6", B), including photodetection means (5", 6"), each said signal initiation circuit generating and outputting a respective electric signal (P1, P2) in response to reception therein of incident optical strobes, a first photodetection means (5") receiving optical strobes incident on said first receiver section (5), and a second photodetection means (6") receiving optical strobes incident on said second receiver section (6), said electrical signals (P1, P2) occurring at mutually displaced times, due to the different mounting locations of the receiver sections (5, 6) with respect to the incident strobes, said optical receiver further including sensing means (7, 8) which senses said electrical signals (P1, P2) and produces an indication signal which indicates reception by a receiver section of an optical strobe, **characterized** in that the receiver sections (5, 6) are mounted at locations on the surface of said unit distributed around the central axis of the unit, and that the first and second photodetection means (5", 6") have polarised electrical connections and are inversely interconnected through these electrical connections such that the polarities of said electrical signals (P1, P2) are mutually inverted, said sensing means (7, 8) comprising means for adding together the said electrical signals (P1, P2) output from said receiver sections.

2. The receiver as claimed in Claim 1, **characterized** in that the receiver sections (5, 6) are operative to receive strobes having a narrow spatial pattern and are allocated mutual disposition around the central axis of the unit such that one receiver section has its major direction (R1, R2) directed beside a maximum target detectable by the other receiver section.

3. The receiver as claimed in Claim 1 or 2, **characterized** in that the two receiver sections are mutually rotated ±90-180° around the central axis of the unit.

4. The receiver as claimed in Claim 3, **characterized** in that the two reciever sections are mutually rotated ±180° or close to ±180° around the central axis of the unit.

5. The receiver as claimed in any of the preceding Claims, **characterized** in that the anode (A1) of the first photodetection means (5") is interconnected at an interconnection point (S) with the cathode (K2) of the second photodetection means (6"); that the cathode (K1) of the first photodetection means (5'') is connected to a plus potential; and that the anode (A2) of the second photodetection means (6") is connected to a minus potential.

6. The receiver as claimed in Claim 5, **characterized** in that the sensing means (7, 8) for sensing the electric signals (P1, P2) are connected to the interconnection point (S) and comprises two parallel-disposed threshold devices (8a, 8b) each allocated their receiver section (5, 6) respectively.

7. The receiver as claimed in claim 6, **characterized** in that the threshold devices (8a, 8b), disposed in parallel, sense , by the intermediary of their first inputs (8a', 8b') occuring signals at the interconnection point (S) and have their other inputs (8a", 8b") coupled to such potentials that the first threshold device (8a) reacts to a signal (P1) coming from the first receiver section, and the second theshold device (8b) reacts to a signal (P2) coming from the second receiver section, indication of the activated receiver section consisting of activation of the output (8a", 8b") of the corresponding threshold device.

8. The receiver as claimed in Claim 6 or 7, **characterized** in that there is connected, between the interconnection points (S) and said threshold devices (8a, 8b), an amplifier device (7).

9. The receiver as claimed in Claim 8, **characterized** in that the amplifier device is of the operational amplifier type.

10. The receiver as claimed in any of the preceding claims, **characterized** in that the first and second receiver sections are each divided respectively into two or more pairs of receiver sections; and that said pairs of receiver sections operate independently of one another.

## Patentansprüche

1. Optischer Empfänger zur Montage in einer Einheit mit langgestreckter Form und einer zentralen Symmetrieachse, wie Rakete, Geschoß od. dgl., wobei der Empfänger im Betrieb zwei oder mehr von einem Zielobjekt reflektierte optische Blitze (3, 4) empfängt, die in gegenseitig verschiedenen Einfallswinkeln (R1, R2) auf der Einheit auftreffen, wobei der Empfänger einen ersten und zweiten Empfängerabschnitt (5, 6) aufweist, die an entsprechenden Stellen an der Einheit montiert sind, wobei die Empfängerabschnitte zusammenarbeiten und jeweils die auf sie auftreffenden optischen Blitze empfangen, wobei der erste und zweite Empfängerabschnitt jeweils eine elektrische Signalerzeugungseinheit (5", 6", B) mit Fotodetektormitteln (5", 6") aufweist und jede Signalerzeugungseinheit bei Empfang eines einfallenden optischen Blitzes ein jeweiliges elektrisches Signal (P1, P2) erzeugt und abgibt, wobei eine erste Fotodetektoreinrichtung (5") auf den ersten Empfängerabschnitt (5) treffende optische Blitze empfängt und eine zweite Fotodetektoreinrichtung (6") auf den zweiten Empfängerabschnitt (6) auftreffende optische Blitze empfängt, wobei die elektrischen Signale (P1, P2) zu gegeneinander versetzten Zeitpunkten auftreten aufgrund der unterschiedlichen Anbringungsorte der Empfängerabschnitte (5, 6) bezüglich der einfallenden Blitze, wobei der optische Empfänger ferner Sensormittel (7, 8) zum Detektieren der elektrischen Signale (P1, P2) und Erzeugung eines Anzeigesignals aufweisen, welches den Empfang eines optischen Blitzes durch einen Empfängerabschnitt anzeigt,
dadurch **gekennzeichnet**, daß die Empfängerabschnitte (5, 6) an Stellen angeordnet sind, die an der Oberfläche der Einheit an deren Mittelachse verteilt sind, und daß die erste und zweite Fotodetektoreinrichtung (5", 6") polarisierte elektrische Anschlüsse haben und durch diese elektrischen Anschlüsse derart invers miteinander verbunden sind, daß die Polaritäten der elektrischen Signale (P1, P2) gegenseitig invertiert werden, wobei die Sensormittel (7, 8) Mittel zum Addieren der beiden von den Empfängerabschnitten abgegebenen elektrischen Signale (P1, P2) aufweisen.

2. Empfänger nach Anspruch 1,
dadurch **gekennzeichnet**, daß die Empfängerabschnitte (5, 6) im Betrieb Blitze mit schmaler Raumverteilung empfangen und daß ihnen eine solche gegenseitige Anordnung um die Mittelachse der Einheit herum zugeordnet ist, daß ein Empfängerabschnitt mit seiner Hauptrichtung (R1, R2) seitlich eines maximalen, von dem anderen Empfängerabschnitt detektierbaren Ziels ausgerichtet ist.

3. Empfänger nach Anspruch 1 oder 2,
dadurch **gekennzeichnet**, daß die beiden Empfängerabschnitte gegeneinander um ± 90 - 180° um die Mittelachse der Einheit gedreht sind.

4. Empfänger nach Anspruch 3,
dadurch **gekennzeichnet**, daß die beiden Empfängerabschnitte gegeneinander um ± 180° oder nahe ± 180° um die Mittelachse der Einheit gedreht sind.

5. Empfänger nach einem der vorangehenden Ansprüche,
dadurch **gekennzeichnet**, daß die Anode (1) der ersten Fotodetektoreinrichtung (5") an einem Verbindungspunkt (S) mit der Kathode (K2) der zweiten Fotodetektoreinrichtung (6") verbunden ist, daß die Kathode (K1) der ersten Fotodetektoreinrichtung (5") mit einem Pluspotential verbunden ist, und daß die Anode (A2) der zweiten Fotodetektoreinrichtung (6") mit einem Minuspotential verbunden ist.

6. Empfänger nach Anspruch 5,
dadurch **gekennzeichnet**, daß die Sensormittel (7, 8) zum Detektieren des elektrischen Signals (P1, P2) mit dem Verbindungspunkt (S) verbunden sind und zwei parallel angeordnete Schwellenglieder (8a, 8b) aufweisen, von denen jedes dem zugehörigen Empfängerabschnitt (5, 6) zugeordnet ist.

7. Empfänger nach Anspruch 6,
dadurch **gekennzeichnet**, daß die parallel angeordneten Schwellenglieder (8a, 8b) mittels ihrer ersten Eingänge (8a", 8b") die am Verbindungspunkt (S) auftretenden Signale erfassen und mit ihren anderen Eingängen (8a", 8b") an solche Potentiale angeschlossen sind, daß das erste Schwellenglied (8a) auf ein von dem ersten Empfängerabschnitt kommendes Signal (P1) reagiert und das zweite Schwellenglied (8b) auf ein von dem zweiten Empfängerabschnitt kommendes Signal (P2) reagiert, wobei eine Anzeige des jeweils aktivierten Empfängerabschnitts aus einer Aktivierung des Ausgangs (8a", 8b") des zugehörigen Schwellengliedes besteht.

8. Empfänger nach Anspruch 6 oder 7,
dadurch **gekennzeichnet**, daß zwischen den Verbindungspunkten (S) und den Schwellengliedern (8a, 8b) eine Verstärkereinrichtung (7) geschaltet ist.

9. Empfänger nach Anspruch 8,
dadurch **gekennzeichnet**, daß die Verstärkereinrichtung vom Typ eines Operationsverstärkers ist.

10. Empfänger nach einem der vorangehenden Ansprüche,
dadurch **gekennzeichnet**, daß der erste und zweite Empfängerabschnitt jeweils in zwei oder mehr Paare von Empfängerabschnitte unterteilt ist und daß die Paare von Empfängerabschnitten unabhängig voneinander arbeiten.

## Revendications

1. Récepteur optique destiné à être monté dans une unité qui a une forme allongée possédant un axe central de symétrie, tel qu'un engin, un projectile ou analogue, le récepteur, lors du fonctionnement, recevant au moins deux signaux optiques d'échantillonnage (3, 4) réfléchis par un objet cible, les signaux optiques d'échantillonnage ayant une incidence correspondant à des angles d'incidence sur l'unité mutuellement différents (R1, R2), le récepteur comprenant une première et une seconde section (5, 6) de récepteur montées à des emplacements respectifs sur l'unité, les sections de récepteur travaillant en coopération et recevant respectivement les signaux optiques d'échantillonnage qui leur parviennent, la première et la seconde section de récepteur comprenant chacune un circuit (5", 6", B) de déclenchement d'un signal électrique comprenant un dispositif de photodétection (5", 6"), chaque circuit de déclenchement de signal créant et transmettant un signal électrique respectif (P1, P2) à la suite de la réception des signaux optiques incidents d'échantillonnage, un premier dispositif de photodétection (5") recevant les signaux optiques d'échantillonnage tombant sur la première section de récepteur (5) et un second dispositif de photodétection (6") recevant les signaux optiques d'échantillonnage tombant sur le second tronçon de récepteur (6), les signaux électriques (P1, P2) apparaissant à des temps décalés mutuellement, à cause des différents emplacements de montage des sections de récepteur (5, 6) par rapport aux signaux incidents d'échantillonnage, le récepteur optique comprenant en outre un dispositif (7, 8) de détection des signaux électriques (P1, P2) et de production d'un signal d'indication de la réception d'un signal optique d'échantillonnage par une section de récepteur, caractérisé en ce que les sections de récepteur (5, 6) sont montées à des emplacements de la surface de l'unité qui sont répartis autour de l'axe central de l'unité, et en ce que le premier et le second dispositif de photodétection (5", 6") ont des connexions électriques polarisées et sont interconnectées en inverse par ces connexions électriques, si bien que les polarités des signaux électriques (P1, P2) sont inversées mutuellement, le dispositif de détection (7, 8) comprenant un dispositif destiné à ajouter des signaux électriques (P1, P2) provenant des sections de récepteur.

2. Récepteur selon la revendication 1, caractérisé en ce que les sections de récepteur (5, 6) sont destinées à recevoir les signaux d'échantillonnage ayant un étroit diagramme spatial et ayant une disposition mutuelle affectée autour de l'axe central de l'unité de manière qu'une section de récepteur ait sa direction principale (R1, R2) dirigée près d'une cible maximale qui peut être détectée par l'autre tronçon de récepteur.

3. Récepteur selon la revendication 1 ou 2, caractérisé en ce que les deux tronçons de récepteur présentent une rotation mutuelle de ±90-180° autour de l'axe central de l'unité.

4. Récepteur selon la revendication 3, caractérisé en ce que les deux sections de récepteur présentent une rotation mutuelle de ±180° ou proche de ±180° autour de l'axe central de l'unité.

5. Récepteur selon l'une quelconque des revendications précédentes, caractérisé en ce que l'anode (A1) du premier dispositif de photodétection (5") est interconnectée, à un point d'interconnexion (S), à la cathode (K2) du second dispositif de photodétection (6"), en ce que la cathode (K1) du premier dispositif de photodétection (5") est connectée à un potentiel positif, et en ce que l'anode (A2) du second dispositif de photodétection (6") est connectée à un potentiel négatif.

6. Récepteur selon la revendication 5, caractérisé en ce que le dispositif (7, 8) de détection des signaux électriques (P1, P2) est connecté au point d'interconnexion (S) et comporte deux dispositifs à seuil disposés en parallèle (8a, 8b) et affectés chacun à une section respective de récepteur (5, 6).

7. Récepteur selon la revendication 6, caractérisé en ce que les dispositifs à seuil (8a, 8b), qui sont montés en parallèle, détectent, par l'intermédiaire de leur première entrée (8a', 8b'), les signaux existant au point d'interconnexion (S), et leur autre entrée (8a", 8b") est couplée à un potentiel tel que le premier dispositif à seuil (8a) réagit à un signal (P1) provenant de la première section de récepteur et le second dispositif à seuil (8b) réagit à un signal (P2) provenant de la seconde section de récepteur, l'indication de la section activée de récepteur étant constituée de l'activation de la sortie (8a", 8b") du dispositif correspondant à seuil.

8. Récepteur selon la revendication 6 ou 7, caractérisé en ce qu'un dispositif amplificateur (7) est connecté entre les points (S) d'interconnexion et les dispositifs à seuil (8a, 8b).

9. Récepteur selon la revendication 8, caractérisé en ce que le dispositif amplificateur est du type d'un amplificateur opérationnel.

10. Récepteur selon l'une quelconque des revendications précédentes, caractérisé en ce que le premier et le second tronçon de récepteur sont divisés chacun respectivement en au moins deux paires de tronçons de récepteur, et en ce que les paires de tronçons de récepteur fonctionnent indépendamment les unes des autres.
